(19) **Europäisches Patentamt**

**European Patent Office**

**Office européen des brevets**

(11) **EP 0 772 904 B1**

(12) **EUROPÄISCHE PATENTSCHRIFT**

| | |
|---|---|
| (45) Veröffentlichungstag und Bekanntmachung des Hinweises auf die Patenterteilung:<br>**01.09.2004 Patentblatt 2004/36** | (51) Int Cl.⁷: **H02P 9/30** |
| (21) Anmeldenummer: **96905743.9** | (86) Internationale Anmeldenummer:<br>**PCT/DE1996/000473** |
| (22) Anmeldetag: **19.03.1996** | (87) Internationale Veröffentlichungsnummer:<br>**WO 1996/037947 (28.11.1996 Gazette 1996/52)** |

(54) **VORRICHTUNG ZUR SPANNUNGSVERSORGUNG MIT ZWEI AUSGANGSSPANNUNGEN**

POWER SUPPLY DEVICE WITH TWO OUTPUT VOLTAGES

DISPOSITIF D'ALIMENTATION EN COURANT AVEC DEUX TENSIONS DE SORTIE

| | |
|---|---|
| (84) Benannte Vertragsstaaten:<br>**DE ES FR GB IT** | (73) Patentinhaber: **ROBERT BOSCH GMBH**<br>**70442 Stuttgart (DE)** |
| (30) Priorität: **26.05.1995 DE 19519298** | (72) Erfinder: **SCHENK, Joachim**<br>**D-71282 Hemmingen (DE)** |
| (43) Veröffentlichungstag der Anmeldung:<br>**14.05.1997 Patentblatt 1997/20** | (56) Entgegenhaltungen:<br>**DE-A- 3 226 426 DE-A- 3 841 610**<br>**DE-A- 3 843 163 DE-A- 4 226 311** |

## Beschreibung

Stand der Technik

Die Erfindung betrifft eine Vorrichtung zur Spannungsversorgung in einem Kraftfahrzeug-Bordnetz, nach der Gattung des Hauptanspruchs.

Es ist bekannt, daß in einem Kraftfahrzeug-Bordnetz, in dem die für die elektrischen Verbraucher benötigte Versorgungsspannung mittels eines Generators erzeugt wird, mehr als eine Versorgungsspannung vom Generator geliefert werden sollte, damit eine zuverlässige komponentenspezifische Versorgung gewährleistet ist. Dazu wird in der DE-OS 37 41 244 vorgeschlagen, einen fremderregten Drehstromgenerator so auszugestalten, daß neben der üblichen gleichgerichteten Bordnetzspannung zusätzlich Drehstromspannungen bereitgestellt werden, die direkt zur Versorgung einer Scheibenheizung verwendet werden. Die Regelung des Generators erfolgt dabei mit Hilfe eines Spannungsreglers, der den Erregerstrom beeinflußt. Die zusätzliche Spannung zur Versorgung der Heizwicklungen wird nicht gleichgerichtet, damit die bei einer Gleichrichtung zwangsweise auftretenden Verluste vermieden werden.

Anstelle eines fremderregten Drehstromgenerators werden bei einigen Bordnetzsystemen permanenterregte Generatoren eingesetzt. Da bei solchen Generatoren eine Erregerstromregelung nicht möglich ist, werden üblicherweise die dem Generator nachfolgenden Gleichrichterbrücken als gesteuerte Gleichrichterbrücken/-halbbrücken aufgebaut, diese umfassen beispielsweise Halbleiterleistungsschalter, die von einem zugehörigen Spannungsregler so angesteuert werden, daß die am Ausgang der Gleichrichterbrücke gelieferte Spannung in etwa konstant ist bzw. nicht überschritten wird, so daß sie als Bordnetzspannung verwendbar ist und zur Aufladung der Fahrzeugbatterie bzw. der Batterien verwendet werden kann. Ein solcher permanenterregter Generator einschließlich der zugehörigen gesteuerten Gleichrichterbrücke ist beispielsweise aus der DE-OS 38 41 610 bekannt, die Erzeugung einer zweiten Spannung ist dabei allerdings nicht vorgesehen.

Aus der DE 42 26 311 A1 ist ein Drehstromgenerator für ein Kraftfahrzeug bekannt, dessen Wicklung in Sternschaltung geschaltet sind. Durch Anzapfung der Sternpunkte wird eine weitere Ausgangsspannung zur Verfügung gestellt, die etwa halb so groß ist wie die übliche Bordnetzspannung. Dieser bekannte Generator weist neben der üblichen Gleichrichterbrücke, an der die Bordnetzspannung abgreifbar ist, noch eine zusätzliche Gleichrichterbrücke auf, die mit dem Sternpunkt verbunden ist und die zweite Ausgangsspannung liefert. Eine Regelung des Laststromes des Generators erfolgt nicht.

Vorteile der Erfindung

Die erfindungsgemäße Vorrichtung zur Spannungsversorgung in einem Kraftfahrzeug-Bordnetz mit den Merkmalen des Anspruchs 1 haben gegenüber dem Bekannten den Vorteil, daß mehrere Spannungen zur Verfügung stehen und gleichzeitig eine Regelung erfolgt, die den Generator unabhängig von der tatsächlich vorliegenden Belastung in einem Betriebszustand hält, in dem eine optimale Leistungsabgabe erfolgen kann.

Erzielt wird dieser Vorteil, indem ein Generator mit einem zweiten oder mehreren Ausgängen verwendet wird und zwischen den Generatorständer und den zusätzlichen Anschlußklemmen weitere Gleichrichteranordnungen eingefügt werden und zusätzliche Mittel vorgesehen sind, mit deren Hilfe der Laststrom des Generators beeinflußt werden kann. Dabei umfassen diese zusätzlichen Mittel steuerbare Leistungsschalter, die entweder einen Teil der Gleichrichterbrücke ersetzen oder dieser nachgeschaltet sind. Die Regelung des Erregerstromes kann sich bei einem fremderregten Generator entweder auf die Ständerspannung, die B+-Spannung oder die B2+-Spannung bzw. Bx+-Spannung beziehen und wird in üblicher Weise vom Spannungsregler durchgeführt.

Bei einem permanenterregten Generator werden die genannten Vorteile in gleicher Weise erzielt, wobei anstelle der Erregerstromregelung eine Regelung an sämtlichen B+-Anschlüssen abgreifbaren Spannungen/Lastströmen erfolgen kann.

Besonders vorteilhaft ist, daß mit den erfindungsgemäßen Vorrichtungen eine Spannungsregelung durchführbar ist, die sicherstellt, daß bei Vollastbetrieb des Generators eine Laststrombegrenzung erfolgt, während bei Teillastbetrieb des Generators die Ausgangsspannung entweder mit Hilfe des Spannungsreglers, der den Erregerstrom regelt, durchgeführt wird, oder bei einem permanenterregten Generator mit Hilfe von zusätzlichen Leistungsbauelementen eine Spannungsbegrenzung erfolgt.

Weitere Vorteile der Erfindung lassen sich mit Hilfe der in den Unteransprüchen angegebenen Maßnahmen erzielen.

Wird die Statorwicklung des Generators, die aus mehreren Windungen besteht, angezapft, können in vorteilhafter Weise Spannungen in einem festen Verhältnis zur geregelten Ausgangsspannung entnommen werden. Mit solchen Anzapfungen läßt sich auch ein Generatorsystem für höhere Spannungen aufbauen, es sind dann für die höheren Spannungen Zusatzwindungen erforderlich.

Die Erfindung läßt sich vorteilhafterweise für Generatoren mit Stern- oder Dreieckschaltungen parallele Mehrfachsternoder Dreieckschaltungen oder Kombinationen von Stern- und Dreieckschaltung einsetzen.

Zeichnung

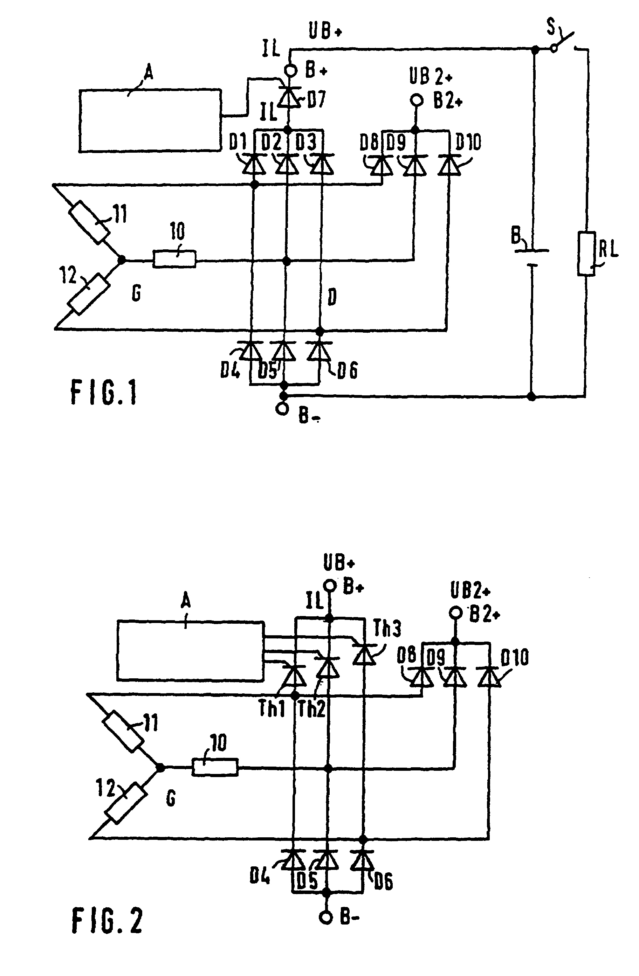

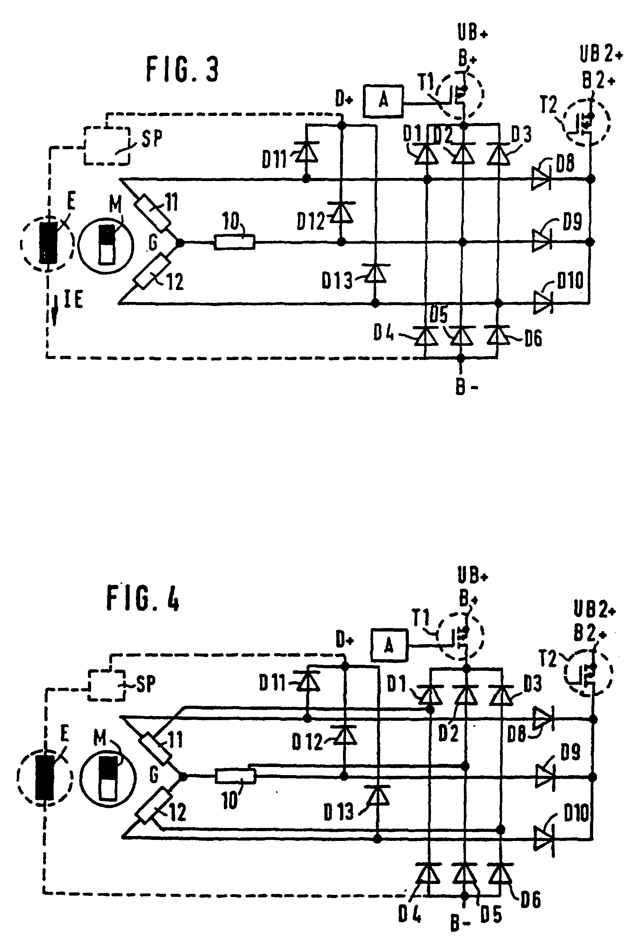

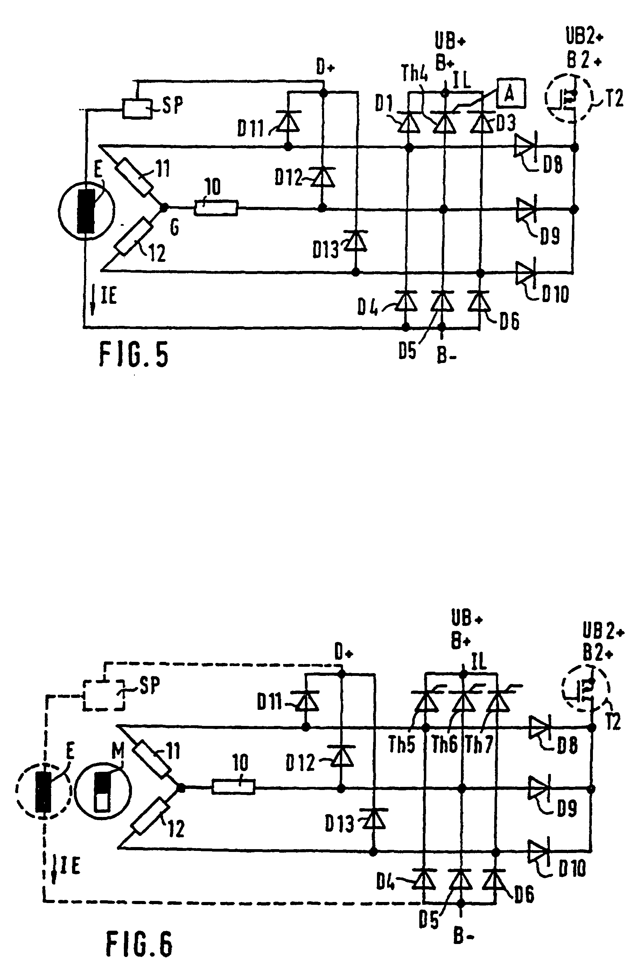

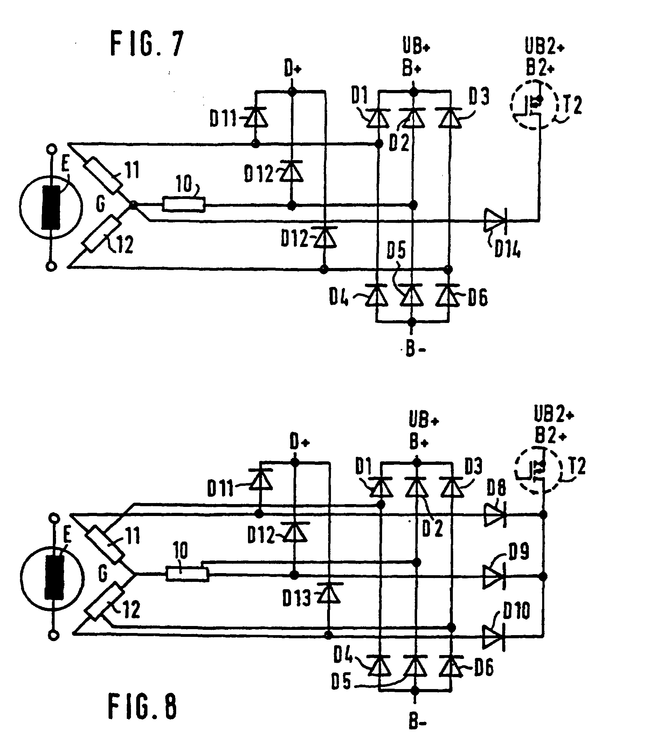

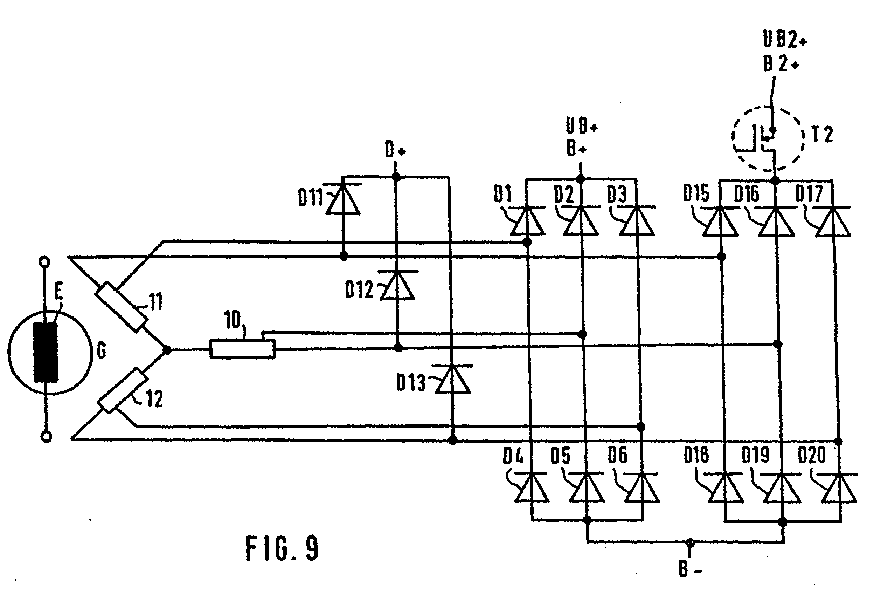

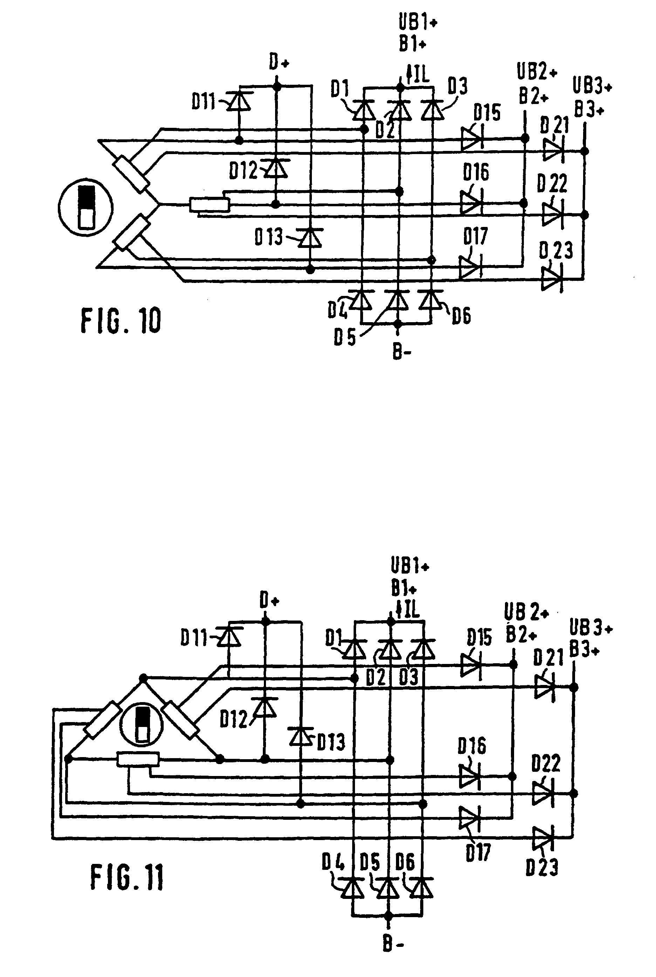

Ausführungsbeispiele der Erfindung sind in der Zeichnung dargestellt und werden in der nachfolgenden Beschreibung näher erläutert. Es zeigen im einzelnen Figur 1 ein erstes Ausführungsbeispiel, bei dem übliche Gleichrichterbrücken verwendet werden und ein zusätzliches angesteuertes Schaltelement zur Begrenzung des Laststromes des Generators vorhanden ist. In Figur 2 ist ein Ausführungsbeispiel dargestellt, bei dem die positive Drehstrombrücke durch ansteuerbare Schaltelemente ersetzt ist. In Figur 3 ist ein Ausführungsbeispiel dargestellt, das weitgehend dem der Figur 1 entspricht, jedoch zusätzlich einen geregelten Ausgang aufweist. In Figur 4 ist ein Ausführungsbeispiel angegeben, bei dem jede Generatorwicklung zwei Anschlüsse aufweist. Figur 5 zeigt ein Ausführungsbeispiel für einen elektrisch erregten Generator mit einphasiger Laststromregelung und Figur 6 ein Beispiel mit einem permanenterregten Generator, das dem der Figur 2 entspricht, jedoch zusätzlich einen geregelten Ausgang aufweist. Die Figuren 7 bis 9 zeigen weitere Ausführungsbeispiele für einen elektrisch erregten Generator, wobei in Figur 7 eine sternmittelpunktanzapfung mit nachgeschalteter zusätzlichen Diode und einem Leistungssteller vorhanden ist. In den Figuren 10 und 11 sind Beispiele für Mehrfachabzapfungen in Stern- und Dreieckschaltung angegeben.

Beschreibung der Ausführungsbeispiele

In Figur 1 sind vom Generator G lediglich die Ständerwicklungen 10, 11, 12 dargestellt. Dabei ist es unerheblich, ob der Generator G ein fremderregter oder ein permanenterregter Generator ist.

Die Ständerwicklungen 10, 11, 12 sind in üblicher Weise mit der Diodenbrücke D verbunden. Die Dioden D1, D2, D3 werden üblicherweise als Plusdioden, die Dioden D4, D5, D6 als Minusdioden bezeichnet. Der negative Anschluß der Diodenbrücke D ist mit B- bezeichnet, die andere Seite der Diodenbrücke D führt über einen ansteuerbaren Halbleiterleistungsschalter D7 zum Anschluß B+, an dem die Spannung UB+ auftritt. Angesteuert wird der Halbleiterleistungsschalter D7 mittels der Ansteuereinrichtung A.

Eine weitere Diodenbrücke mit den Dioden D8, D9, D10 steht mit den Ständerwicklungen 10, 11, 12 sowie den Mittelpunkten der Diodenbrücke D in Verbindung und führt zum zusätzlichen Anschluß B+2, an dem die Spannung UB2+ auftritt.

Mit der in Figur 1 dargestellten Schaltungsanordnung, die auf die erfindungswesentlichen Bestandteile beschränkt ist, läßt sich am Anschluß B+2 eine zusätzliche Spannung auskoppeln, die bei der noch zu erläuternden Ansteuerung die gewünschten Eigenschaften aufweist. Mit der Ansteuerung A wird der vom Generator. G abgegebene Laststrom IL so begrenzt, daß bei hoher Last der Strom IL in vorgebbarer später beschriebenen Weise begrenzt werden kann.

Bei dem in Figur 2 dargestellten Ausführungsbeispiel, bei dem gleiche Bauteile wiederum die gleiche Bezeichnung tragen, ist die positive Halbbrücke der Gleichrichterbrücke ersetzt durch eine gesteuerte Gleichrichterbrücke, die beispielsweise Thyristoren Th1, Th2, Th3 umfaßt, die von der Ansteuerung A angesteuert werden zur Beschränkung des Laststromes IL.

In Figur 3 ist ein weiteres Ausführungsbeispiel dargestellt, das einen permanenterregten (M) oder gestrichelt gezeichnet, einen, selbst- oder fremderregten, eine Erregerwicklung E aufweisenden Generator mit geregelten Zusatzausgang mit geregelter Spannung U2+ und externem Leistungsschalter bzw. Linearregler umfaßt. Gleiche Bauteile sind wie auch in den weiteren Ausführungsbeispielen wieder mit denselben Bezugszeichen versehen. Zusätzlich ist beim Ausführungsbeispiel nach Figur 3, das sich auf einem fremderregten Generator bezieht, die Erregerstrombrücke mit den Erregerdioden D11, D12, D13 dargestellt. Diese Erregerstromdioden führen zum Anschluß D+ und über diesen über den Spannungsregler SP und die Erregerwicklung E zum Generatoranschluß B-. Der Strom durch die Erregerwicklung IE wird mit Hilfe des Spannungsreglers SP in bekannter Weise geregelt, so daß die Ausgangsspannung des Generators in etwa konstant bleibt.

Zur Laststrombegrenzung dient beim Ausführungsbeispiel nach Figur 3 der Transistor T1, der mit Hilfe der Ansteuerung A ansteuerbar ist, mit Hilfe eines weiteren Transistors T2 läßt sich auf der Kathodenseite der zusätzlichen Dioden D8, D9, D10 eine zusätzliche geregelte Ausgangsspannung UB2+ erzeugen, wobei die Ansteuerung des Transistors T2 je nach Last so erfolgt, daß T2 als Linearregler oder Schaltregler arbeitet.

Der Transistor T2 kann im übrigen entfallen, sofern als Generator ein selbst- oder fremderregter Generator mit Erregerstromregelung verwendet wird.

In Figur 4 ist ein Ausführungsbeispiel dargestellt, bei dem die Statorwicklungen 10, 11, 12 jeweils einen zweiten Anschluß aufweisen (was auch mehrfach vorhanden sein kann) und dieser zur Auskopplung der zusätzlichen Spannung über die Dioden D8, D9, D10 verwendet wird. Diese Schaltungsanordnung, die wiederum für einen permanenterregten Generator geeignet ist, sofern der Transistor T2 vorhanden ist oder für einen selbst- oder fremderregten Generator (gestrichelt) mit Erregerstromregelung, wobei der Transistor T2 entfallen kann, liefert als zweite Generatorausgangsspannung eine geregelte Spannung UB2+, die höher ist als die am B+ abgegriffene Spannung, wobei die Spannungshöhe vom Anzapfungspunkt abhängt.

Die in den Figuren 5 bis 9 dargestellten Ausführungsbeispiele unterscheiden sich von den bereits beschriebenen lediglich dadurch, daß die eine oder mehrere Dioden durch einen Thyristor ersetzt werden. Die Thyristoren sind dabei mit Th4 - Th7 bezeichnet. Mit den dargestellten Leistungsbauelementen lassen sich also 1-, 2- oder 3-phasig gesteuerte Halboder Vollbrücken darstellen. Zusätzlich Ausgänge sind als 1-, 2- oder 3-phasig gesteuerte/ungesteuerte Halb- oder Vollbrücke mit unterschiedlichen Leistungsbauelementen darstellbar. Weiterhin ist eine Abzapfung am Mittelpunkt mit gesteuertem oder ungesteuertem Gleichrichter möglich, wie es beispielsweise in Figur 7 dargestellt ist. In Figur 9 ist der zusätzliche Anschluß B2+ über eine Gleichrichterbrücke D15 bis D20 mit dem Generator in Verbindung, sowie einem laststrombegrenzenden Halbleiterleistungsbauelement T2.

Alle in den Figuren 1 - 9 dargestellten Ausführungsbeispiele weisen zumindest ein ansteuerbares Bauelement in der Hauptgleichrichterbrücke bzw. zwischen den Generator und dem Anschluß B+ auf, über das der Laststrom IL des Generators beeinflußt werden kann. Weiterhin ist allen Ausführungsbeispielen gemeinsam, daß neben dem üblichen Anschluß B+, an dem eine erste Spannung UB+ abgreifbar ist, mindestens ein zweiter Anschluß B2+ vorhanden ist, an dem eine zweite Spannung UB2+ abgreifbar ist, wobei je nach Ausgestaltung diese zweite Spannung eine Gleichspannung oder eine Wechselspannung ist. Weiterhin kann diese Spannung gleich der üblichen Bordnetzspannung sein, oder aber gegenüber dieser höhere oder auch niedrigere Werte aufweisen, je nach Anschluß an die Statorwicklungen 10, 11, 12 bzw. der Leistungsstellerart (Linear- oder Schaltregler).

Bei den Ausführungsbeispielen mit einer zusätzlichen Gleichrichterbrücke kann der Generator an den zusätzlichen Ausgängen Gleichstrom liefern. Je nach Anschluß der zusätzlichen Ausgangsklemme bzw. der zusätzlichen Ausgangsklemmen kann eine Trennung zwischen den Stromliefersystemen vorhanden sein, durch geeignete Ansteuerung der steuerbaren Bauelemente, beispielsweise Thyristoren, ist es möglich, einen der Ausgänge mit höherer Priorität auszustatten, so daß beispielsweise eine Ladepriorität für einen Startspeicher realisierbar ist.

In Figur 10 und 11 sind Schaltungen für einen Generatoren mit Mehrfachanzapfungen der Ständerwicklung dargestellt, wobei Figur 10 für eine Sternschaltung und Figur 11 für eine Mehrfachanzapfung in Dreieckschaltung steht. Mit solchen Schaltungen lassen sich mehrere Spannungen gewinnen, deren Spannungshöhe von der Stelle der Anzapfung abhängt, dabei gilt:

$$U_{Bx+} = \frac{UB+ \cdot \text{angezapfte Windung}}{\text{Gesamtwindungszahl}}$$

Wird die Ausgangsspannung geregelt, sind auch die erhaltenen Spannungen UB2+, UB3+ geregelt. Durch Einsatz von in Figur 10, Figur 11 nicht dargestellten Längsreglern oder Ersatz der einzelnen Dioden durch steuerbare Halbleiterleistungsschalter ist eine Regelung wie bei den Ausführungsbeispielen 1 bis 9 möglich.

Die Regelung der Generatoren erfolgt in der Art, daß bei selbst- und fremderregten Generatoren die Ausgangsspannung an der Klemme B+ durch das Unterbrechen des Erregerstromes, also in herkömmlicher Weise mittels eines Spannungsreglers erfolgt. Bei der Regelung des Generators wird jedoch unterschieden zwischen Vollastbetrieb und Teillastbetrieb. Bei Vollastbetrieb, bei dem die Spannungshöhe des Generators von der Höhe des erforderlichen Laststromes bestimmt wird, könnte bei zu großer Last die Klemmenspannung zu weit absinken, so daß sich für die Versorgung der einzelnen Verbraucher Probleme ergeben bzw. diese so ausgelegt sein müßten, daß sie auch bei deutlich niedrigerer Bordnetzspannung noch zuverlässig arbeiten. Es wird deshalb bei der vorgeschlagenen Regelung im Vollastbetrieb der Laststrom IL des Generators auf einen vorgebbaren Wert beschränkt, so daß sichergestellt wird, daß auch die Ausgangsspannung des Generators und damit der Zusatzausgänge einen entsprechenden Wert nicht unterschreiten kann. Die Beschränkung des Laststromes erfolgt durch Ansteuerung des oder der steuerbaren Bauteile der Gleichrichterbrücke. Bei den dargestellten Ausführungsbeispielen wird die Ansteuereinrichtung A den Thyristoren entsprechende Ansteuersignale zuführen.

Bei den Ausführungsbeispielen, bei denen die Drehstrombrücke nicht teilweise, halb oder voll durch Leistungsschalter ersetzt wurden, erfolgt die Laststrombegrenzung durch Ansteuerung des Leistungsschalters zwischen der Gleichrichterbrücke und dem Anschluß B+.

Die Ausgangsspannung an der Klemme B2+ kann entweder mit Hilfe des Transistors T2 geregelt werden, es kann auch eine ungeregelte Spannung abgegeben werden. Bei einer herkömmlichen Erregerstromregelung kann der Transistor T2 entfallen und es wird dennoch eine geregelte Ausgangsspannung erhalten.

Im Teillastbetrieb des Generators wird die Ausgangsspannung entweder durch den bisherigen Spannungsregler begrenzt oder beispielsweise bei permanenterregten Generatoren mit Hilfe eines an den Ausgängen angebrachten (zusätzlichen) Leistungsbauelementes begrenzt. Die Ansteuerung der gesteuerten Gleichrichter, der Thyristoren bzw. Halbleiterleistungsbauelemente kann in Block-, Phasenanschnittsbetrieb oder Linearbetrieb erfolgen. Ein eventuell vorhandener Gleichstromregler kann kontinuierlich betrieben werden.

Durch die unterschiedliche Regelung bei Vollastbetrieb des Generators kann der Generator ständig in einem Bereich betrieben werden, der gerade dem Übergang zur Vollast entspricht. Es ist damit sichergestellt, daß der Generator unter allen Umständen die maximal mögliche Leistung abgibt, die an der Teillast-/Vollastgrenze erhalten wird.

Die Erkennung der Belastung es Generators kann durch Messung seiner Ausgangsspannung, durch Messung des Laststromes oder des Erregerstrom-Tastverhältnisses etc. erfolgen.

Die Erfindung ist nicht auf die dargestellten Ausführungsbeispiele eingeschränkt, sondern läßt sich grundsätzlich auch für Generatoren, die nicht nur einen oder zwei, sondern mehrere zusätzliche Ausgänge aufweisen, z. B. durch zusätzliche Windungsanzapfuhgen oder parallelen bzw. isolierten Zusatzwieklungen realisieren, wobei je nach Anzapfungspunkt an den entsprechenden Ausgängen Bx+ unterschiedliche Spannungshöhen einstellbar sind, so daß komponentenspezifische Spannungen UBx+ erhältlich sind, mit x = 1, 2, 3 usw.

Statt der dargestellten Thyristoren können auch andere schnelle Bauelemente eingesetzt werden, beispielsweise schnelle Halbleiterbauelemente, auch kann eine Brücke unterschiedliche Schaltelemente aufweisen.

Die Gleichrichterbrücken können als halbgesteuerte mit Dioden- oder Zenerdioden ausgeführt sein oder als vollgesteuerte Brücken, die einen vollständigen Übergangsschutz gewährleisten.

Bei permanenterregten Generatoren ist jeder Anschluß mit einem Leistungssteller zu versehen, damit an den Anschlüssen keine Überspannung auftreten kann. Diese Leistungssteller können neben der Spannungsbegrenzungsfunktion auch noch zur Laststromregelung auf Generatorbestpunkt verwendet werden.

Die Regelung kann bei Generatoren folgender Art bzw. in Kombination der folgenden Merkmale sein:

| | |
|---|---|
| Ständerwicklung: | Stern- oder Dreieck, bzw. Kombination einfach oder mehrfach (parallel oder voneinander isoliert) |
| Erregung: | eigen, fremd, permanent bzw. kombiniert |
| Anzapfungen: | Mittelpunkt mit Diode oder Leistungsschalter bzw. Kombination Wicklungsanzapfung einfach oder mehrfach |
| Gleichrichter: | Drehstrombrücke einfach |
| | Drehstrombrücke mehrfach |
| - zusätzlich: | gemeinsamer Massebezug oder |
| | unterschiedlicher Massebezug |
| -art: | halbgesteuerte Drehstrombrücke |
| | vollgesteuerte Drehstrombrücke |
| | teilgesteuerte Drehstrombrücke (nur 1 oder 2 Phase) |
| Dioden: | Standarddioden |
| | Schottky- bzw. Low-Voltage-Dioden Z-Dioden |
| steuerbare Leistungsschalter: | plus- oder minusseitig |
| | an einem bzw. mehreren bzw. allen Anschlüssen |

Bei Generatoren in Sternschaltung mit Zusatzwindung an den äußeren Wicklungsenden sind auch Windungen mit niedrigerem Leitungsquerschnitt, zur Ausnutzung der Freiräume im Wicklungsraum einsetzbar.

Bei Generatoren mit separater oder separaten Ständerwicklungen werden voneinander isolierte Wicklungen mit voneinander isolierten Stern- bzw. Dreieckspunkten oder nicht isolierten Sternpunkten in die Wicklungsräume gelegt. Dabei sind auch Kombinationen von Stern- und Dreieckschaltungen denkbar.

**Patentansprüche**

**1.** Vorrichtung zur Spannungsversorgung, in einem Fahrzeug-Bordnetz mit einem einen Laststrom (IL) abgebenden Generator (G), dessen Ausgangsspannung (UB+) so geregelt wird, dass sie etwa konstant ist, mit einer dem Generator (G) nachgeschalteten ersten Gleichrichteranordnung (D1-D6), die an einem ersten Anschluß (B+) eine Spannung (UB+) liefert, mit einer zweiten Gleichrichteranordnung (D8, D9, D10), über die an wenigstens einem zweiten Anschluß (B2+) eine zweite Spannung (UB2+) abgreifbar ist, **dadurch gekennzeichnet, dass** zusätzliche Mittel vorhanden sind, zur Beeinflussung des Laststromes (IL) des Generators (G), die wenigstens ein mittels einer Ansteuerung (A) ansteuerbares Halbleiterelement umfassen.

**2.** Vorrichtung zur Spannungsversorgung nach Anspruch 1, **dadurch gekennzeichnet, dass** die zusätzliche Mittel zur Beeinflussung des Laststromes Thyristoren (Th1-Th7) sind.

**3.** Vorrichtung zur Spannungsregelung nach Anspruch 1 oder 2, **dadurch gekennzeichnet, dass** der Generator (G) ein selbstoder ein fremderregter Generator ist, dessen Erregerstrom (IE) mittels eines Spannungsreglers (SP) geregelt wird.

4.  Vorrichtung zur Spannungsregelung nach Anspruch 1, 2 oder 3, **dadurch gekennzeichnet, dass** die ansteuerbaren Halbleiterelemente Bestandteil der Hauptgleichrichterbrücke sind und die entsprechenden Brückengleichrichter ersetzen.

5.  Vorrichtung zur Spannungsversorgung nach einem der vorhergehenden Ansprüche, **dadurch gekennzeichnet, dass** die ansteuerbaren Halbleiterbauelemente zusätzlich zur Hauptgleichrichterbrücke vorhanden sind und zwischen den Plusdioden und den Anschluß (B+) liegen.

6.  Vorrichtung zur Spannungsregelung nach Anspruch 5, **dadurch gekennzeichnet, dass** das zusätzliche Halbleiterbauelement wenigstens einen Thyristor (Th1-Th7) oder einen Transistor (T1, T2) sowie eine Ansteuerung (A) umfaßt.

7.  Vorrichtung zur Spannungsversorgung nach einem der vorhergehenden Ansprüche, **dadurch gekennzeichnet, dass** die Hauptgleichrichterbrücke mit jeweils einem ersten Anschluß der Statorwicklung (10, 11, 12) des Generators (G) in Verbindung steht und die zusätzliche Spannungsklemme (B2+) mit demselben Anschluß wenigstens einer der Statorwicklungen (10, 11, 12) in Verbindung steht.

8.  Vorrichtung zur Spannungsversorgung nach einem der vorhergehenden Ansprüche, **dadurch gekennzeichnet, dass** die Statorwicklungen (10, 11, 12) des Generators (G) eine Sternpunktschaltung bilden und der Sternpunkt über ein Gleichrichterelement mit der zusätzlichen Spannungsklemme (B2+) verbunden ist.

9.  Vorrichtung zur Spannungsversorgung nach einem der vorhergehenden Ansprüche, **dadurch gekennzeichnet, dass** die Regelung der Ausgangsspannung des Generators (G) bei Teillastbetrieb mit Hilfe des Spannungsreglers (SP) erfolgt und bei Vollastbetrieb eine Ansteuerung der steuerbaren Halbleiterelemente ausgelöst wird, zur Beschränkung des Laststromes (IL) des Generators (G), zum Betrieb des Generators (G) im günstigsten Arbeitsbereich.

10. Vorrichtung zur Spannungsregelung nach Anspruch 8, **dadurch gekennzeichnet, dass** die Erkennung des Vollastzustandes durch Auswertung der vom Generator (G) abgegebenen Spannung, Stromes oder Erregerstromtastverhältnisses erfolgt und Vollastzustand erkannt wird, wenn diese Spannung einen vorgebbaren Wert unterschreitet.

11. Vorrichtung zur Spannungsversorgung insbesondere nach einem der vorhergehenden Ansprüche, **dadurch gekennzeichnet, dass** die Statorwicklungen Anzapfungen aufweisen bei einer vorgebbaren Anzahl von Windungen, die zu zusätzlichen Spannungsklemmen (Bx+) führen, an denen die Spannungen (UBx+) abgreifbar sind, deren Spannungshöhe von der Anzapfungsstelle abhängt.

12. Vorrichtung zur Spannungsversorgung nach einem der vorhergehenden Ansprüche, **dadurch gekennzeichnet, dass** die Statorwicklung (10, 11, 12) des Generators (G) in Sternschaltung, Dreieckschaltung oder als Kombination aus Stern- und Dreieckschaltung ausgebildet ist und die Wicklungsanzapfungen an jeder Wicklung vorhanden sind.

13. Vorrichtung zur Spannungsversorgung nach einem der vorhergehenden Ansprüche, **dadurch gekennzeichnet, dass** an den äußeren Wicklungsenden weitere Windungen angeschlossen sind, die zu den weiteren Anschlüssen (Bx+) führen.

**Claims**

1.  Apparatus for voltage supply, in a vehicle power supply system with a generator (G) which emits a load current (IL) and whose output voltage (UB+) is regulated such that it is approximately constant, having a first rectifier arrangement (D1-D6) which is connected downstream from the generator (G) and produces a voltage (UB+) at a first connection (B+), having a second rectifier arrangement (D8, D9, D10), via which a second voltage (UB2+) can be tapped off at at least one second connection (B2+), **characterized in that** additional means are provided in order to influence the load current (IL) of the generator (G), which means comprise at least one semiconductor element which can be driven by means of a drive (A).

2.  Apparatus for voltage supply according to Claim 1, **characterized in that** the additional means for influencing the load current are thyristors (Th1-Th7).

3. Apparatus for voltage regulation according to Claim 1 or 2, **characterized in that** the generator (G) is a self-excited or externally excited generator, whose excitation current (IE) is regulated by means of a voltage regulator (SP).

4. Apparatus for voltage regulation according to Claim 1, 2 or 3, **characterized in that** the semiconductor elements which can be driven are components of the main rectifier bridge and replace the corresponding bridge rectifiers.

5. Apparatus for voltage supply according to one of the preceding claims, **characterized in that** the semiconductor components which can be driven are provided in addition to the main rectifier bridge, and are located between the positive diodes and the connection (B+).

6. Apparatus for voltage regulation according to Claim 5, **characterized in that** the additional semiconductor component comprises at least one thyristor (Th1-Th7) or a transistor (T1, T2) as well as a drive (A).

7. Apparatus for voltage supply according to one of the preceding claims, **characterized in that** the main rectifier bridge is connected to in each case one first connection of the stator winding (10, 11, 12) of the generator (G), and the additional voltage terminal (B2+) is connected to the same connection of at least one of the stator windings (10, 11, 12).

8. Apparatus for voltage supply according to one of the preceding claims, **characterized in that** the stator windings (10, 11, 12) of the generator (G) form a star point circuit, and the star point is connected via a rectifier element to the additional voltage terminal (B2+).

9. Apparatus for voltage supply according to one of the preceding claims, **characterized in that** the output voltage of the generator (G) is regulated during partial load operation by means of the voltage regulator (SP), and driving of the controllable semiconductor elements is initiated during full load operation, in order to limit the load current (IL) of the generator (G), in order to operate the generator (G) in the best operating range.

10. Apparatus for voltage regulation according to Claim 8, **characterized in that** the full load state is identified by evaluation of the voltage, current or excitation current duty ratio which is emitted from the generator (G), and the full load state is identified when this voltage falls below a value which can be predetermined.

11. Apparatus for voltage supply in particular according to one of the preceding claims, **characterized in that** the stator windings have taps at a number of turns which can be predetermined, which lead to additional voltage terminals (Bx+) at which the voltages (UBx+), whose voltage level depends on the tapping point, can be tapped off.

12. Apparatus for voltage supply according to one of the preceding claims, **characterized in that** the stator winding (10, 11, 12) of the generator (G) is in the form of a star circuit, a delta circuit or a combination of a star and delta circuit, and the winding taps are provided on each winding.

13. Apparatus for voltage supply according to one of the preceding claims, **characterized in that** further turns which lead to the further connections (Bx+) are connected to the outer winding ends.

## Revendications

1. Dispositif d'alimentation en tension dans un circuit de bord d'un véhicule, comportant un générateur (G) fournissant un courant de charge (IL), dont la tension de sortie (UB+) est réglée de telle sorte qu'elle est à peu près constante, comportant un premier ensemble de redresseurs (D1-D6) connecté après le générateur (G) et qui fournit une tension (UB+) au niveau d'une première connexion (B+), comportant un deuxième ensemble de redresseurs (D8, D9, D10), par lequel peut être reçue une deuxième tension (UB2+) au niveau d'au moins une deuxième connexion (B2+),
**caractérisé en ce que**
des moyens supplémentaires sont prévus pour influencer le courant de charge (IL) du générateur (G) et comprennent au moins un élément semi-conducteur pouvant être commandé au moyen d'une commande (A).

2. Dispositif d'alimentation en tension selon la revendication 1,
**caractérisé en ce que**
les moyens supplémentaires permettant d'influencer le courant de charge sont des thyristors (Th1-Th7).

3. Dispositif de régulation de la tension selon la revendication 1 ou 2,
**caractérisé en ce que**
le générateur (G) est un générateur à auto-excitation ou à excitation indépendante, dont le courrant d'excitation est réglé au moyen d'un régulateur de tension (SP).

4. Dispositif de régulation de la tension selon la revendication 1, 2 ou 3,
**caractérisé en ce que**
les éléments semi-conducteurs pouvant être commandés forment un composant du pont de redressement principal et remplacent les redresseurs en pont correspondants.

5. Dispositif d'alimentation en tension selon l'une des revendications précédentes,
**caractérisé en ce que**
les composants semi-conducteurs pouvant être commandés sont présents en plus du pont de redressement principal et se trouvent entre les diodes plus et la connexion (B+).

6. Dispositif de régulation de la tension selon la revendication 5,
**caractérisé en ce que**
le composant semi-conducteur supplémentaire comprend au moins un thyristor (Th1-Th7) ou un transistor (T1, T2) ainsi qu'une commande (A).

7. Dispositif d'alimentation en tension selon l'une des revendications précédentes,
**caractérisé en ce que**
le pont de redressement principal est relié à respectivement une première connexion de l'enroulement du stator (10, 11, 12) du générateur (G), et la borne de tension supplémentaire (B2+) est reliée à la même connexion d'au moins l'un des enroulements du stator (10, 11, 12).

8. Dispositif d'alimentation en tension selon l'une des revendications précédentes,
**caractérisé en ce que**
les enroulements du stator (10, 11, 12) du générateur (G) forment un montage à point neutre, et le point neutre est relié à la borne de tension supplémentaire (B2+) par le biais d'un élément de redresseur.

9. Dispositif d'alimentation en tension selon l'une des revendications précédentes,
**caractérisé en ce que**
la régulation de la tension de sortie du générateur (G), en fonctionnement en charge partielle, s'effectue à l'aide du régulateur de tension (SP) et en fonctionnement en charge totale, une commande des éléments semi-conducteurs pouvant être commandés est déclenchée, afin de limiter le courant de charge (IL) du générateur (G), afin que le générateur (G) fonctionne dans la plage de travail la plus favorable.

10. Dispositif de régulation de la tension selon la revendication 8,
**caractérisé en ce que**
la reconnaissance de l'état de charge totale s'effectue par l'exploitation de la tension fournie par le générateur (G), du courant ou du facteur d'utilisation du courant d'excitation, et l'état de charge totale est détecté lorsque cette tension est inférieure à une valeur pouvant être prédéterminée.

11. Dispositif d'alimentation en tension en particulier selon l'une des revendications précédentes,
**caractérisé en ce que**
les enroulements du stator présentent des prises pour un nombre de spires pouvant être prédéterminé, qui conduisent à des bornes de tension supplémentaires (Bx+), au niveau desquelles peuvent être reçues les tensions (UBx+), dont la valeur dépend de la place de la prise.

12. Dispositif d'alimentation en tension selon l'une des revendications précédentes,
**caractérisé en ce que**
l'enroulement du stator (10, 11, 12) du générateur (G) est configuré en montage en étoile, en montage en triangle ou en tant que combinaison de montage en étoile et en triangle, et les prises d'enroulement sont présentes au niveau de chaque enroulement.

13. Dispositif d'alimentation en tension selon l'une des revendications précédentes,
**caractérisé en ce que**

**EP 0 772 904 B1**

d'autres spires sont reliées aux extrémités extérieures de l'enroulement et conduisent aux autres connexions (Bx+).

FIG.1

FIG.2

FIG. 3

FIG. 4

FIG.5

FIG.6

FIG. 7

FIG. 8

FIG. 9

EP 0 772 904 B1

FIG. 10

FIG. 11

15